(19) Europäisches Patentamt
European Patent Office
Office européen des brevets

(11) **EP 2 004 469 B1**

(12) **EUROPÄISCHE PATENTSCHRIFT**

(45) Veröffentlichungstag und Bekanntmachung des Hinweises auf die Patenterteilung:
**15.02.2012 Patentblatt 2012/07**

(21) Anmeldenummer: **07727863.8**

(22) Anmeldetag: **05.04.2007**

(51) Int Cl.:
***B60W 30/02*** *(2012.01)*

(86) Internationale Anmeldenummer:
**PCT/EP2007/053395**

(87) Internationale Veröffentlichungsnummer:
**WO 2007/113329 (11.10.2007 Gazette 2007/41)**

(54) **VERFAHREN ZUR BESTIMMUNG VON INSTABILEN FAHRZUSTÄNDEN**

METHOD FOR DETERMINING UNSTABLE DRIVING STATES

PROCEDE DE DETERMINATION DE SITUATIONS DE CONDUITES INSTABLES

(84) Benannte Vertragsstaaten:
**DE FR**

(30) Priorität: **06.04.2006 DE 102006016223**
**05.04.2007 DE 102007016951**

(43) Veröffentlichungstag der Anmeldung:
**24.12.2008 Patentblatt 2008/52**

(73) Patentinhaber: **Continental Teves AG & Co. oHG**
**60488 Frankfurt (DE)**

(72) Erfinder: **GÄRTNER, Michael**
**60439 Frankfurt Am Main (DE)**

(56) Entgegenhaltungen:
| | |
|---|---|
| EP-A- 1 013 526 | DE-A1- 4 444 408 |
| DE-A1- 19 819 780 | DE-A1- 19 844 880 |
| US-A- 6 122 577 | US-B1- 6 625 527 |

**Beschreibung**

**Technisches Gebiet**

Die vorliegende Erfindung betrifft ein Verfahren zur Bestimmung von instabilen Fahrzuständen.

**Hintergrund der Erfindung**

In Kraftfahrzeugen werden häufig Inkrementalsensoren zur Erfassung von Fahrzustandsgrößen verwendet. Derartige Sensoren ermöglichen lediglich die Ermittlung von Veränderungen der Fahrzustandsgröße. Ausgehend von einem bekannten Startwert kann anhand der ermittelten Veränderungen der Absolutwert der Fahrzustandsgröße ermittelt werden. Um den Absolutwert der Fahrzustandsgröße zu bestimmen, muss daher zunächst wenigstens ein Absolutwert ermittelt werden, der zur Ermittlung des Startwerts herangezogen wird. Dieser Absolutwert kann beispielsweise anhand von Messwerten weiterer Fahrzustandsgrößen modellbasiert berechnet werden.

Besonders häufig werden inkremental messende Lenkwinkelsensoren in Kraftfahrzeugen eingesetzt. Zur Ermittlung eines Absolutwerts des Lenkwinkels, der zur Bestimmung des Startwerts für die Lenkwinkelmessung herangezogen wird, kann beispielsweise anhand weiterer Sensorsignale ermittelt werden, ob das Fahrzeug geradeaus fährt, da in dieser Situation von einem absoluten Lenkwinkel von Null ausgegangen werden kann. Ferner kann beispielsweise ein Absolutwert des Lenkwinkels, wie weiter unten erläutert, in einem Fahrzeugmodell berechnet und zur Bestimmung eines Startwerts herangezogen werden. In bekannten Anwendungen muss dieser Startwert nach jedem Zündungsneustart neu ermittelt werden. Um die Bestimmung des Absolutwerts mit einer hinreichenden Genauigkeit vornehmen zu können, muss dieser über einen längeren Zeitraum nach einem Zündungsneustart ausgewertet werden. Während dieses Zeitraums steht kein Absolutwert des Lenkwinkels zur Verfügung. Der Lenkwinkel kann lediglich in Bezug auf einen beliebig gewählten Startwert bestimmt werden, der beispielsweise einem Wert entspricht, der bei Beendigung des vorangegangenen Zündungslaufs vorgelegen hat. Dieser entspricht jedoch im Allgemeinen nicht dem bei einem Zündungsneustart vorliegenden Absolutwert des Lenkwinkels, da der Lenkwinkel verändert werden kann, während die Zündung abgeschaltet ist. Der anhand eines derartigen Startwerts bestimmte Lenkwinkel weist daher in der Regel einen Offsetfehler auf, dessen Größe nicht bekannt ist.

Eine zuverlässige modellbasierte Bewertung der Fahrsituation zur Bestimmung des Absolutwerts des Lenkwinkels kann nur dann vorgenommen werden, wenn der Fahrzustand des Fahrzeugs stabil ist, d.h. wenn das Fahrzeug den Lenkvorgaben des Fahrers in definierter Weise folgt. In instabilen Fahrsituationen, d.h. Fahrsituationen, in denen das Fahrzeug den Fahrervorgaben nicht in "normaler" Weise folgt, besteht kein definierter Zusammenhang zwischen den gemessenen Fahrzustandsgrößen und den Lenkvorgaben des Fahrers. Daher kann eine derartige Bewertung der Fahrsituation zur Bestimmung eines Absolutwerts des Lenkwinkels nur dann vorgenommen werden, wenn ein stabiler Fahrzustand vorliegt. Infolgedessen ist es erforderlich, instabile Fahrzustände zu erkennen.

Die US 6,122,5777 ist als nächstliegender Stand der Technik zu sehen und offenbart eine Vorrichtung und ein Verfahren zur Überwachung von Sensoren in einem Fahrzeug, die verschiedene physikalische Größen repräsentierende Signale abgeben. Auf Basis der Signale zumindest zweier Sensoren werden zwei identisch definierte Vergleichsvariablen bestimmt und in Abhängigkeit von den Vergleichsvariablen ein Referenzwert ermittelt. Anhand des Referenzwerts wird zumindest ein Sensor überwacht und das Signal zumindest eines Sensors korrigiert. Somit können einem Fahrdynamikregelsystem nach Durchführung des Verfahrens korrigierte Sensordaten bereitgestellt werden und auftretende Sensordefekte signalisiert werden.

Bekannte Verfahren zur zuverlässigen Erkennung instabiler Fahrsituationen basieren auf dem Vergleich gemessener Werte einer Fahrzustandsgröße mit Werten, die anhand von Fahrervorgaben in Fahrzeugmodellen berechnet werden. Für einen derartigen Vergleich ist in der Regel jedoch die Kenntnis der Absolutwerte aller Fahrzustandsgrößen erforderlich. Daher können diese Verfahren nicht angewendet werden, solange kein Absolutwertwert für den Lenkwinkel bestimmt werden kann.

**Darstellung der Erfindung**

Hiervon ausgehend ist es eine Aufgabe der vorliegenden Erfindung, ein Verfahren vorzuschlagen, welches eine zuverlässige Erkennung von instabilen Fahrzuständen auch bei beliebig großen Offsetfehlern des Werts einer Fahrzustandsgröße erlaubt.

Diese Aufgabe wird durch ein Verfahren nach Anspruch 1 gelöst.

Demgemäß ist es vorgesehen, ein Verfahren der eingangs genannten Art mit den folgenden Schritten durchzuführen:

   a) Ermitteln, ob sich eine Differenz zwischen einem ersten Wert einer Fahrzustandsgröße, der mittels eines ersten Sensors ermittelt wird, und einem zweiten Wert der Fahrzustandsgröße, der aus Messwerten mindestens eines weiteren Sensors berechnet wird, mit der Zeit betragsmäßig vergrößert,

b) Filtern der Differenz mittels eines Verzögerungsglieds, nachdem festgestellt worden ist, dass die Differenz sich vergrößert hat,

c) Vergleichen der gefilterten Differenz und der ungefilterten Differenz,

d) Feststellen des Vorliegens eines instabilen Fahrzustands, wenn der Vergleich ergibt, dass eine Abweichung zwischen der gefilterten Differenz und der ungefilterten Differenz einen vorgegebenen Schwellenwert überschreitet, und

e) dass die Schritte b), c) und d) wiederholt werden, falls sich die Abweichung zwischen der ungefilterten Differenz und der gefilterten Differenz vergrößert hat und dass Schritt a) ausgeführt wird, nachdem festgestellt worden ist, dass sich die Abweichung zwischen der ungefilterten Differenz und der gefilterten Differenz nicht vergrößert hat.

Ein hoher Wert der zuvor genannten Differenz würde bereits das Vorliegen eines instabilen Fahrzustands anzeigen, wenn es sich bei dem ersten Wert der Fahrzustandsgröße um einen Absolutwert handeln würde, der keinen Offsetfehler aufweist. Die Erfindung basiert demgegenüber jedoch auf der Idee, Veränderung der Differenz zu bewerten, um das Vorliegen eines instabilen Fahrzustands festzustellen. Hierdurch kann das Vorliegen eines instabilen Fahrzustands unabhängig von der Kenntnis der Absolutwerte bei einem beliebig großen Fehler des ersten Werts der Fahrzustandsgröße ermittelt werden. Voraussetzung ist lediglich, dass sich der Fehler im Vergleich zu den Messwerten nur langsam ändert, wie es insbesondere bei konstanten Offsetfehlern der Fall ist.

Für die Bewertung der Veränderung der Differenz wird die Differenz vorteilhaft mittels eines Verzögerungsglieds gefiltert und ein Vergleich zwischen gefilterter und ungefilterter Differenz durchgeführt. Mittels einer derartigen Filterung lässt sich das Verhalten des Kraftfahrzeugs berücksichtigen, das mit einer gewissen Verzögerung auf Fahrervorgaben reagiert. Die Filterung beginnt vorteilhaft, wenn festgestellt worden ist, dass sich die Differenz vergrößert hat, da eine Vergrößerung der Differenz auf eine mögliche Instabilität hindeutet.

Vorteilhaft wird somit das Verfahren mit dem Schritt a) von Neuem begonnen, wenn sich die Abweichung zwischen der ungefilterten Differenz und der gefilterten Differenz nicht mehr vergrößert. Wird nach einer zuvor erkannten Instabilität für einen festgelegten Zeitraum keine Vergrößerung der Differenz beobachtet, so ist nicht mehr von einem instabilen Fahrzustand auszugehen. Dieser Zeitraum ist so zu bemessen, dass das Fahrzeug zunächst wieder vollständig in einen stabilen Fahrzustand einschwingen kann.

Eine Ausführungsform der Erfindung sieht vor, dass es sich bei dem Verzögerungsglied um ein $PT_n$-Glied, insbesondere um ein $PT_1$-Glied oder ein $PT_2$-Glied handelt.

Anhand eines $PT_2$-Glieds lässt sich das Übertragungsverhalten des Kraftfahrzeugs in einer besonders realistischen Weise nachbilden. Es hat sich jedoch gezeigt, dass instabile Fahrsituationen bei Verwendung eines $PT_1$-Glieds gleichfalls zuverlässig ermittelt werden können. Gegenüber einem $PT_2$-Glied hat ein $PT_1$-Glied dabei den Vorteil, dass es weniger Rechenaufwand erfordert, so dass Rechenresourcen eingespart werden können.

Ferner ist es in einer Ausgestaltung der Erfindung vorgesehen, dass es sich bei der Größe um einen Einschlagswinkel lenkbarer Räder des Kraftfahrzeugs oder um einen Drehwinkel eines Lenkrads des Kraftfahrzeugs handelt.

Eine Weiterbildung der Erfindung ist dadurch gekennzeichnet, dass der zweite Wert der Größe aus einer gemessenen Gierrate des Kraftfahrzeugs und einer gemessenen Querbeschleunigung des Kraftfahrzeugs in einem Fahrzeugmodell ermittelt wird.

Eine damit verbundene Ausführungsform der Erfindung beinhaltet, dass es sich bei dem Fahrzeugmodell um ein stationäres Einspurmodell des Kraftfahrzeugs handelt.

Bei einer Ausgestaltung der Erfindung ist es vorgesehen, dass der erste Wert der Fahrzustandsgröße ausgehend von einem Startwert mittels eines Inkrementalsensors ermittelt wird.

Der Startwert kann grundsätzlich beliebig gewählt werden, da ein fehlerbehafteter Startwert lediglich zu einem Offsetfehler des ersten Werts der Fahrzustandsgröße führt und die Erfindung eine Erkennung von instabilen Fahrzuständen unabhängig von derartigen Offsetfehler ermöglicht. Eine zweckmäßige Wahl des Startwerts bei einem Zündungsneustart ist beispielsweise der letzte in einem vorangegangenen Zündungslauf ermittelte Wert der Fahrzustandsgröße.

Darüber hinaus wird ein Computerprogrammprodukt bereitgestellt, das ein Computerprogramm aufweist, das Anweisungen zur Ausführung eines Verfahrens der zuvor beschriebenen Art umfasst.

Das erfindungsgemäße Verfahren erlaubt es, im Falle eines Eingangssignals mit einem Offsetfehler das Vorliegen einer instabilen Fahrsituation zuverlässig zu erkennen. Obwohl auch andere Systeme von dem erfindungsgemäßen Verfahren profitieren können, stellen Fahrzeuge mit einem inkremental messenden Lenkwinkelsensor einen bevorzugten Anwendungsfall der Erfindung dar. In derartigen Fahrzeugen ermöglicht die Erfindung, das Vorliegen von instabilen Fahrzuständen fest-zustellen, bevor ein Absolutwert des Lenkwinkels vorliegt.

**Kurze Beschreibung der Figur.**

In der einzigen Figur der Zeichnung ist schematisch ein Kraftfahrzeug mit einem Steuergerät zur Durchführung eines erfindungsgemäßen Verfahrens dargestellt.

**Ausführliche Beschreibung eines Ausführungsbeispiels**

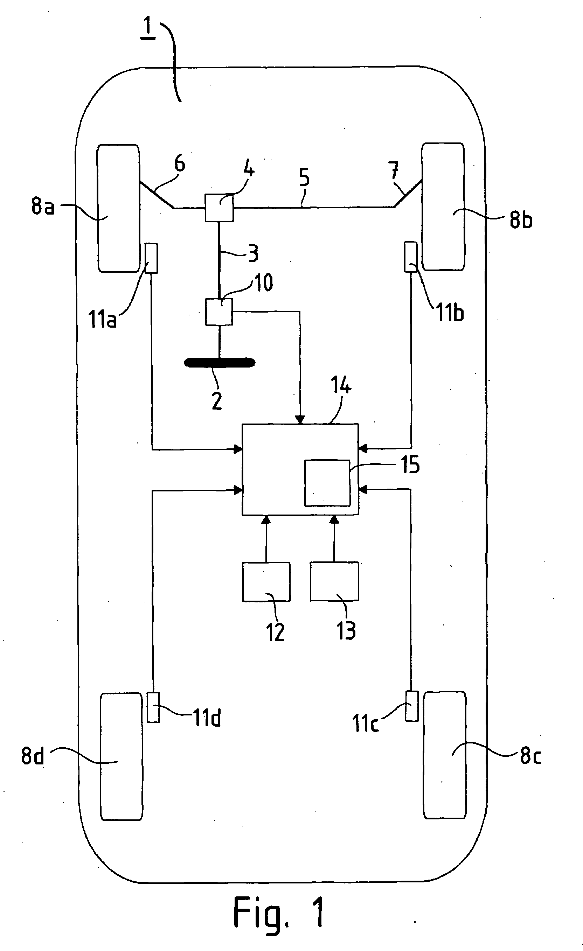

In Figur 1 ist schematisch ein Kraftfahrzeug 1 mit vier Rädern 8a, 8b, 8c, 8d dargestellt. Das Kraftfahrzeug verfügt über ein Lenksystem, bei dem ein Lenkrad 2 über Lenkwelle 3 und ein Lenkgetriebe 4 in eine Spurstange 5 eingreift, an der seitlich weitere Spurstangen 6, 7 befestigt sind, die jeweils mit einem lenkbaren Rad 8a, 8b des Fahrzeugs verbunden sind. Durch eine Drehung des Lenkrads 2 lässt sich hierbei der Lenkwinkel an den lenkbaren Rädern 8a, 8b verändern. Der Drehwinkel des Lenkrads 2 bzw. der Lenkwelle 3 wird mithilfe eines Lenkwinkelsensors 10 erfasst.

Es wird davon ausgegangen, dass es sich bei dem Lenkwinkelsensor 10 um einen Inkrementalsensor handelt. Ein derartiger Sensor ermöglicht lediglich die Ermittlung von Veränderungen des Lenkwinkels. Ausgehend von einem bekannten Startwert kann anhand der ermittelten Veränderungen des Lenkwinkels der Absolutwert des Lenkwinkels bestimmt werden. Da jedoch der beim Einschalten der Zündung vorliegende Absolutwert des Lenkwinkels in der Regel nicht bekannt ist, kann der absolute Lenkwinkel nach einem Zündungsneustart in der Regel nicht unmittelbar ermittelt werden. Um den absoluten Lenkwinkel zu bestimmen, muss zunächst wenigstens ein absoluter Lenkwinkel bestimmt werden, der zur Ermittlung des Startwerts für die Lenkwinkelmessung herangezogen wird. Hierzu kann beispielsweise anhand von weiteren Sensorsignalen ermittelt werden, ob das Fahrzeug geradeaus fährt, da in dieser Situation von einem absoluten Lenkwinkel von Null ausgegangen werden kann. Ferner kann beispielsweise ein Absolutwert des Lenkwinkels, wie weiter unten erläutert, in einem Fahrzeugmodell berechnet und zur Bestimmung des Offsetfehlers herangezogen werden. Derartige Verfahren zur Bestimmung des absoluten Lenkwinkels mittels eines relativ messenden Lenkwinkelsensors sind dem Fachmann an sich bekannt und werden daher hier nicht im Einzelnen erläutert.

Das Kraftfahrzeug 1 verfügt weiterhin über jeweils einen Raddrehzahlsensor 11a, 11b, 11c, 11d an jedem Rad 8a, 8b, 8c, 8d sowie über einen Gierratensensor 12 und einen Querbeschleunigungssensor 13.

Die Signale der zuvor genannten Sensoren werden einem Steuergerät 14 zugeführt, welches über ein Modul 15 verfügt, in dem insbesondere ohne Kenntnis des Absolutwerts des Lenkwinkels ein instabiler Fahrzustand erkannt wird. Diese Erkennung wird durchgeführt, solange die Verfahren zur Bestimmung des Absolutwerts des Lenkwinkels noch nicht beendet sind, d.h. kein Absolutwert des Lenkwinkels ermittelt werden kann. Eine derartige Erkennung ist deshalb wichtig, weil in den zuvor skizzierten Verfahren zur Bestimmung eines Absolutwerts des Lenkwinkels Modelle zur Nachbildung des Fahrzeugverhaltens verwendet werden, die nur bei stabilem Fahrverhalten gültig sind. Wenn in dem Modul 15 das Vorliegen eines instabilen Fahrzustands festgestellt wird, müssen diese Verfahren daher angepasst oder unterbrochen werden.

Das Steuergerät 14 bzw. das Modul 15 arbeiten taktweise mit einer vorgegebenen Taktdauer. Ein Takt wird im Folgenden auch als Loop bezeichnet.

In einer Ausführungsform der Erfindung wird der Lenkwinkel in dem Modul 15 nach einem Zündungsneustart ausgehend von dem letzten Absolutwert des Lenkwinkels im vorherigen Zündungszyklus anhand der Signale des Lenkwinkelsensors 10 bestimmt. Zu diesem Zweck wird der Absolutwert des Lenkwinkels fortlaufend in einem nicht-flüchtigen Speicher gespeichert und bei einem Zündungsneustart der im Speicher vorliegende Wert ausgelesen. Der ausgehend von diesem Startwert ermittelte Lenkwinkel wird im Folgenden als Lenkwinkel SWA bezeichnet. Da das Lenkrad 2 gedreht worden sein kann, während die Zündung abgeschaltet war, entspricht der Lenkwinkel SWA in der Regel nicht dem Absolutwert des Lenkwinkels. Wenn das Lenkrad 2 bei abgeschalteter Zündung gedreht worden ist, weist der Lenkwinkel SWA vielmehr einen Offsetfehler auf, dessen Betrag dem Drehwinkel entspricht, um den das Lenkrad 2 gedreht worden ist.

Ferner wird in dem Modul 15 oder in dem Steuergerät 14 unter der Annahme stationärer Bedingungen ein Lenkwinkel STA-TIONARY_SWA in einem Fahrzeugmodell berechnet. In einer Ausführungsform wird dabei das lineare Einspurmodell verwendet und der Lenkwinkel STATIONARY_SWA durch

$$STATIONARY\_SWA = \left( \frac{l \cdot \dot{\psi}}{v} + a_y \cdot EG \right) \cdot i_L \qquad\qquad (1)$$

berechnet. Hierbei ist $l$ der Radstand des Fahrzeugs, $\dot{\psi}$ die mittels des Gierratensensors 12 gemessene Gierrate, $v$ die

aus den Signalen der Raddrehzahlsensoren 11a, 11b, 11c, 11d ermittelte Fahrzeuggeschwindigkeit, $a_y$ die mittels des Querbeschleunigungssensors 13 gemessene Querbeschleunigung (im Schwerpunktsystem des Fahrzeugs) und EG der Eigenlenkgradient des Fahrzeugs. Bei dem Radstand *l* handelt es sich um einen konstanten Parameter. Der Eigenlenkgradienten EG kann ebenfalls als konstanter Parameter vorgegeben sein. Die Werte dieser Parameter können in einem Speicher des Steuergeräts 14 hinterlegt sein, und müssen nicht dynamisch bestimmt werden. Mit $i_L$ ist die Lenkübersetzung zwischen dem Radeinschlagswinkel und dem Lenkwinkel am Lenkrad 2 bezeichnet. In einer Ausführungsform der Erfindung ist dieser Wert fest und kann ebenfalls in einem Speicher des Steuergeräts 14 gespeichert sein. Der Lenkwinkel STATIONARY_SWA wird in jedem Loop einmal berechnet und liefert eine erste Abschätzung für den Absolutwert des Lenkwinkels.

Wenn das Lenkrad 2 gedreht wird, folgt das Fahrzeugverhalten der Lenkwinkelvorgabe jedoch nur mit einer gewissen Verzögerung, so dass zwischen dem Lenkwinkel einerseits und der Gierrate sowie der Querbeschleunigung anderseits eine Phasendifferenz entsteht. Daher erfolgt in einer Ausführungsform der Erfindung eine Korrektur des Lenkwinkels STA-TIONARY_SWA anhand eines Korrekturterms STAT_SWA_CORR, der sich im Wesentlichen aus der mittels des Lenkwinkelsensors 10 ermittelten Lenkwinkeländerung ergibt. Der Korrekturterm STAT_SWA_CORR ist im n-ten Loop durch

$$\text{STAT\_SWA\_CORR}(n) = (\text{SWA}(n) - \text{SWA}(n-1)) + \text{corr\_factor} * \text{STAT\_SWA\_CORR}(n-1) \quad (2)$$

gegeben, wobei SWA(n) den Wert des Lenkwinkels SWA im n-ten Loop bezeichnet und die Größe STAT_SWA_CORR im ersten Loop mit dem Wert 0 initialisiert wird (STAT_SWA_CORR (1) = 0). Der Faktor corr_factor ist ein Korrekturfaktor, der beispielsweise den Wert 15/16 annimmt.

Aus dem Lenkwinkel STATIONARY_SWA und der Größe STAT_SWA_CORR wird ein Lenkwinkel CALCULATED_SWA berechnet, der durch

$$\text{CALCULATED\_SWA} = \text{STATIONARY\_SWA} + \text{STAT\_SWA\_CORR} \quad (3)$$

gegeben ist.

Der in dem Modul 15 durchgeführte Algorithmus zur Bestimmung instabiler Fahrzustände ist dazu ausgelegt, Fahrsituationen zu erkennen, in denen das Kraftfahrzeug 1 den Lenkvorgaben des Fahrers nicht oder nicht vollständig folgt. Grundsätzlich kann eine derartige Situation daran erkannt werden, dass die Differenz zwischen dem Absolutwert des Lenkwinkels und dem berechneten Lenkwinkel CALCULATED_SWA groß ist. Dies setzt jedoch die Kenntnis des absoluten Lenkwinkels voraus. Um eine solche Situation auch dann zu erkennen, wenn der Absolutwert des Lenkwinkels noch nicht bekannt ist, wird das im Folgenden dargestellte Verfahren angewendet.

In jedem Loop wird in dem Modul 15 die Differenz

$$\text{swa\_dev} = |\text{SWA} - \text{CALCULATED\_SWA}| \quad (4)$$

bestimmt.

Grundsätzlich liegt der zuvor beschriebene instabile Fahrzustand vor, wenn sich die Differenz swa_dev vergrößert. Hierbei ist jedoch zu beachten, dass das Fahrzeug, wie zuvor bereits erwähnt, nur mit einer gewissen Verzögerung auf Lenkbewegungen reagiert. Bei einer Lenkwinkeländerung vergrößert sich die Differenz swa_dev auch dann, wenn ein stabiler Fahrzustand vorliegt. Daher basiert der im Folgenden beschriebene Algorithmus auf dem Vergleich zwischen der ungefilterten Differenz swa_dev und einer aus der ungefilterten Differenz ermittelten gefilterten Differenz SWA_DEV_FILTERED, die mittels eines Verzögerungsglieds ermittelt wird. Durch die Filterung wird dabei die Verzögerung in der Fahrzeugreaktion berücksichtigt.

Die eigentliche Erkennung instabiler Fahrzustände wird in einer Ausführungsform erst dann vorgenommen, wenn die Fahrzeuggeschwindigkeit größer als ein vorgegebener Schwellenwert ist, der beispielsweise 10,8 km/h beträgt. Solange die Fahrzeuggeschwindigkeit unterhalb des Schwellenwerts liegt, wird die gefilterte Differenz SWA_DEV_FILTERED gleich der ungefilterten Differenz swa_dev gesetzt.

Wenn die Fahrzeuggeschwindigkeit oberhalb des Schwellenwerts liegt, wird in jedem Loop n die in diesem Loop ermittelte ungefilterte Differenz swa_dev(n) mit der in dem vorangegangenen Loop ermittelten gefilterten Differenz SWA_DEV_FILTERED (n-1) verglichen. Wenn dabei festgestellt wird, dass swa_dev(n) nicht größer als SWA_DEV_FILTERED(n-1) ist, wird in dem Loop n die gefilterte Differenz SWA_DEV_FILTERED gleich der ungefilterten Differenz swa_dev gesetzt. Wenn jedoch festgestellt wird, dass swa_dev(n) größer als SWA_DEV_FILTERED (n-1) ist, dann erfolgt eine Filterung des Signals swa_dev. Somit erfolgt die Filterung der Differenz swa_dev erst dann, wenn sich diese Differenz vergrößert hat.

In einer Ausführungsform der Erfindung ist die gefilterte Differenz SWA_DEV_FILTERED im n-ten Loop durch

$$\text{SWA\_DEV\_FILTERED(n)} =$$
$$\text{const1* SWA\_DEV\_FILTERED(n-1) + const2*swa\_dev (5)}$$

gegeben mit const1 = (filt_const -1)/filt_const und const2 = 1/filt_const. Mit filt_const ist eine Filterkonstante bezeichnet, die beispielsweise den Wert 256 hat. Die Filtervorschrift in Gleichung (5) entspricht einem $PT_1$-Übertragungsverhalten des Filters, d.h. einem Verzögerungsglied 1. Ordnung. In weiteren Ausführungsformen der Erfindung kann gleichfalls auch ein anderes Filter, beispielsweise ein Filter mit $PT_2$-Übertragungsverhalten, d.h. ein Verzögerungsglied zweiter Ordnung eingesetzt werden. Ein $PT_1$-Glied belastet den Prozessor des Steuergeräts 14 jedoch in geringerem Maße und führt zu gleichfalls zufriedenstellenden Ergebnissen.

Wenn in einem Loop erstmals eine Filterung vorgenommen worden ist, wird in den folgenden Loops wiederum ein Vergleich zwischen swa_dev(n) SWA_DEV_FILTERED(n-1) vorgenommen und der Wert der gefilterten Differenz SWA_DEV_FILTERED(n) in der zuvor beschriebenen Weise bestimmt. D.h., wenn swa_dev(n) nicht größer als SWA_DEV_FILTERED (n-1) ist, wird die gefilterte Differenz SWA_DEV_FILTERED (n) gleich der ungefilterten Differenz swa_dev(n) gesetzt, ansonsten wird SWA_DEV_FILTERED (n) gemäß Gleichung (5) berechnet.

Ein instabiler Fahrzustand wird festgestellt, wenn in einem Loop n die Differenz zwischen der ungefilterten Differenz swa_dev(n) und der gefilterten Differenz SNA_DEV_FILTERED (n-1) einen vorgegebenen Schwellenwert übersteigt, der beispielsweise 30° beträgt.

Ein festgestellter instabiler Fahrzustand wird zurückgesetzt, d.h., es wird wieder von einem stabilen Fahrzustand ausgegangen, wenn die zuvor genannte Differenz den vorgegebenen Schwellenwert unterschreitet. Neben der zuvor beschriebenen Erkennung deutet zudem auch ein hoher Korrekturterm STAT_SWA_CORR auf einen instabilen Fahrzustand hin. Daher wird ein instabiler Fahrzustand in einer Ausführungsform nur dann zurückgesetzt, wenn zusätzlich der Korrekturterm STAT_SMA_CORR kleiner als ein vorgegebener Schwellenwert ist, der beispielsweise 20° beträgt.

Es versteht sich, dass die vorherige Beschreibung von Ausführungsbeispielen rein beispielhaft zu verstehen ist. Grundsätzlich kann die Erfindung auch in anderer Weise ausgeführt. Insbesondere ist sie nicht darauf beschränkt, eine instabile Fahrsituation bei einem fehlerhaften Lenkwinkelsignal zu bestimmen. Vielmehr können in ähnlicher Weise auch instabile Fahrzustände bestimmt werden, wenn ein Messsignal einer anderen Fahrzustandsgröße fehlerbehaftet ist. Gleichfalls ermöglicht die Erfindung auch dann eine zuverlässige Erkennung von instabilen Fahrzuständen, wenn korrekte Absolutwerte der Fahrzustandsgrößen herangezogen werden.

**Patentansprüche**

**1.** Verfahren zum Erkennen eines instabilen Fahrzustands eines Kraftfahrzeugs (1), umfassend die folgenden Schritte:

a) Ermitteln, ob sich eine Differenz zwischen einem ersten Wert einer Fahrzustandsgröße, der mittels eines ersten Sensors (10) ermittelt wird, und einem zweiten Wert der Fahrzustandsgröße, der aus Messwerten mindestens eines weiteren Sensors (12) berechnet wird, mit der Zeit betragsmäßig vergrößert,
b) Filtern der Differenz mittels eines Verzögerungsglieds, nachdem festgestellt worden ist, dass die Differenz sich vergrößert hat,
c) Vergleichen der ungefilterten Differenz und der gefilterten Differenz,
d) Feststellen des Vorliegens einer instabilen Fahrsituation, wenn der Vergleich ergibt, dass eine Abweichung zwischen der ungefilterten Differenz und der gefilterten Differenz einen vorgegebenen Schwellenwert überschreitet,
**dadurch gekennzeichnet**
e) **dass** die Schritte b), c) und d) wiederholt werden, falls sich die Abweichung zwischen der ungefilterten Differenz und der gefilterten Differenz vergrößert hat und dass Schritt a) ausgeführt wird, nachdem festgestellt worden ist, dass sich die Abweichung zwischen der ungefilterten Differenz und der gefilterten Differenz nicht vergrößert hat.

**2.** Verfahren nach Anspruch 1,
**dadurch gekennzeichnet,**
**dass** es sich bei dem Verzögerungsglied um ein $PT_n$-Glied, insbesondere um ein $PT_1$-Glied oder ein $PT_2$-Glied handelt.

**3.** Verfahren nach einem der vorangegangenen Ansprüche,
**dadurch gekennzeichnet,**
**dass** es sich bei der Größe um einen Einschlagswinkel lenkbarer Räder (8a, 8b) des Kraftfahrzeugs (1) oder um einen Drehwinkel eines Lenkrads (2) des Kraftfahrzeugs (1) handelt.

**4.** Verfahren nach Anspruch 3,
**dadurch gekennzeichnet,**
**dass** der zweite Wert der Größe aus einer gemessenen Gierrate des Kraftfahrzeugs (1) und einer gemessenen Querbeschleunigung des Kraftfahrzeugs (1) in einem Fahrzeugmodell ermittelt wird.

**5.** Verfahren nach Anspruch 4,
**dadurch gekennzeichnet,**
**dass** es sich bei dem Fahrzeugmodell um ein stationäres Einspurmodell des Kraftfahrzeugs (1) handelt.

**6.** Verfahren nach einem der vorangegangenen Ansprüche,
**dadurch gekennzeichnet,**
**dass** der erste Wert der Fahrzustandsgröße ausgehend von einem Startwert mittels eines Inkrementalsensors (10) ermittelt wird.

**7.** Verfahren nach einem der vorangegangenen Ansprüche,
**dadurch gekennzeichnet,**
**dass** bei einem Zündungsneustart der letzte Wert in einem vorangegangenen Zündungslauf ermittelte Wert der Fahrzustandsgröße als Startwert herangezogen wird.

**8.** Computerprogrammprodukt, das ein Computerprogramm aufweist, welches Anweisungen zur Ausführung eines Verfahrens nach einem der vorangegangenen Ansprüche in einem Prozessor umfasst.

**Claims**

**1.** Method for detecting an unstable driving state of a motor vehicle (1), comprising the following steps:

a) determining whether the difference between a first value of a driving state variable, which difference is acquired by means of a first sensor (10), and a second value of the driving state variable, which is calculated from measured values of at least one further sensor (12), increases in size over time,
b) filtering the difference by means of a delay element after it has been detected that the difference has increased,
c) comparison of the unfiltered difference and the filtered difference,
d) detection of the presence of an unstable driving situation if the comparison reveals that a deviation between the unfiltered difference and the filtered difference exceeds a predefined threshold value, **characterized**
e) **in that** the steps b), c) and d) are repeated if the deviation between the unfiltered difference and the filtered difference has increased, and in that step a) is carried out after it has been detected that the deviation between the unfiltered difference and the filtered difference has not increased.

**2.** Method according to Claim 1, **characterized in that** the delay element is a $PT_n$ element, in particular a $PT_1$ element or a $PT_2$ element.

**3.** Method according to one of the preceding claims, **characterized in that** the variable is a lock angle of steerable wheels (8a, 8b) of the motor vehicle (1) or a rotational angle of a steering wheel (2) of the motor vehicle (1).

**4.** Method according to Claim 3, **characterized in that** the second value of the variable is acquired from a measured yaw rate of the motor vehicle (1) and a measured lateral acceleration of the motor vehicle (1) in a vehicle model.

5. Method according to Claim 4, **characterized in that** the vehicle model is a steady-state single-track model of the motor vehicle (1).

6. Method according to one of the preceding claims, **characterized in that** the first value of the driving state variable is acquired on the basis of a starting value by means of an incremental sensor (10).

7. Method according to one of the preceding claims, **characterized in that** when the ignition is restarted the last value of the driving state variable which was acquired in a preceding ignition sequence is used as the starting value.

8. Computer program product which has a computer program which comprises instructions for carrying out a method according to one of the preceding claims in a processor.

**Revendications**

1. Procédé de détection d'un état instable de roulage d'un véhicule automobile (1), le procédé comprenant les étapes suivantes :

   a) déterminer si une différence entre une première valeur d'une grandeur d'état de roulage déterminée au moyen d'un premier détecteur (10) et une deuxième valeur de la grandeur d'état de roulage calculée à partir de valeurs mesurées par au moins un autre détecteur (12) augmente progressivement en valeur,
   b) filtrer la différence au moyen d'un organe de ralentissement après qu'il a été constaté que la différence augmente,
   c) comparer la différence non filtrée à la différence filtrée,
   d) conclure à la présence d'une situation instable de roulage si la comparaison indique qu'un écart entre la différence non filtrée et la différence filtrée dépasse une valeur de seuil prédéterminée,
   **caractérisé en ce que**
   e) répéter les étapes b), c) et d) au cas où l'écart entre la différence non filtrée et la différence filtrée a augmenté et exécuter l'étape a) après qu'il a été constaté que l'écart entre la différence non filtrée et la différence filtrée n'a pas augmenté.

2. Procédé selon la revendication 1, **caractérisé en ce que** l'organe de ralentissement est un organe $Pt_n$, en particulier un organe $Pt_1$ ou un organe $Pt_2$.

3. Procédé selon l'une des revendications précédentes, **caractérisé en ce que** la grandeur est l'angle de braquage des roues directrices (8a, 8b) du véhicule automobile (1) ou l'angle de rotation du volant (2) du véhicule automobile (1).

4. Procédé selon la revendication 3, **caractérisé en ce que** la deuxième valeur de la grandeur est déterminée à partir d'une vitesse de lacet mesurée du véhicule automobile (1) et d'une accélération transversale mesurée du véhicule automobile (1) dans un modèle du véhicule.

5. Procédé selon la revendication 4, **caractérisé en ce que** le modèle du véhicule est un modèle de maintien stationnaire sur la bande de circulation du véhicule automobile (1).

6. Procédé selon l'une des revendications précédentes, **caractérisé en ce que** la première valeur de la grandeur d'état du véhicule est déterminée à partir d'une valeur initiale au moyen d'un détecteur incrémentiel (10).

7. Procédé selon l'une des revendications précédentes, **caractérisé en ce que** lors d'un nouveau démarrage, la dernière valeur déterminée dans une période d'allumage précédente de la grandeur d'état du véhicule est utilisée comme valeur initiale.

8. Produit de programme informatique qui présente un programme informatique qui comporte des instructions permettant d'exécuter dans un processeur un procédé selon l'une des revendications précédentes.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 61225777 B